# NOUVEAU FASCICULE DE BREVET EUROPEEN

(11) **EP 3 274 315 B2**
(45) Date de publication et mention de la décision concernant l'opposition: **08.01.2025**
(45) Mention de la délivrance du brevet: 18.08.2021
(21) Numéro de dépôt: 16717425.9
(22) Date de dépôt: 25.03.2016
(51) Int. Cl.: C04B 28/00, C04B 28/26, C04B 14/10, C04B 38/02, C04B 111/00, C04B 111/60, C04B 111/40

(54) **COMPOSITION POUR MATÉRIAU DE CONSTRUCTION A BASE DE MÉTAKAOLIN, PROCÉDÉ DE FABRICATION ASSOCIE ET UTILISATION POUR LA RÉALISATION D'ÉLÉMENTS DE CONSTRUCTION**
ZUSAMMENSETZUNG FÜR METAKAOLINBAUMATERIAL, ZUGEHÖRIGES VERFAHREN ZUR HERSTELLUNG DER BESAGTEN ZUSAMMENSETZUNG UND VERWENDUNG ZUR HERSTELLUNG VON KONSTRUKTIONSELEMENTEN
COMPOSITION FOR METAKAOLIN CONSTRUCTION MATERIAL, RELATED METHOD FOR MANUFACTURING SAID COMPOSITION, AND USE FOR PRODUCING CONSTRUCTION ELEMENTS

(30) Priorité: 27.03.2015 FR 1552615
(43) Date de publication de la demande: 31.01.2018
(60) Demande divisionnaire: 21184111.9
(73) Titulaire: Hoffmann Green Cement Technologies, 85310 Rives de l'Yon (FR)
(72) Inventeur: HOFFMANN, David, 53410 Saint Ouen Des Toits (FR)
(74) Mandataire: Icosa
(86) Numéro de dépôt international: PCT/FR2016/050689
(87) Numéro de publication internationale: WO 2016/156722

(56) Documents cités:
- EP-A1- 2 727 894
- WO-A1-2012/083255
- WO-A2-01/40135
- WO-A2-2010/085537
- WO-A2-2011/020975
- US-A1- 2012 192 765
- SAN NICOLAS R.; CYR M.; ESCADEILLAS G.: "Characteristics and applications of flash metakaolins", APPLIED CLAY SCIENCE, ELSEVIER, AMSTERDAM, NL, vol. 83, 17 September 2013 (2013-09-17), AMSTERDAM, NL , pages 253 - 262, ISSN: 0169-1317, DOI: 10.1016/j.clay.2013.08.036
- T.W. CHENG ET AL: "Fire-resistant geopolymer produced by granulated blast furnace slag", MINERALS ENGINEERING., vol. 16, no. 3, 1 March 2003 (2003-03-01), GB, pages 205 - 210, XP055243661, ISSN: 0892-6875, DOI: 10.1016/S0892-6875(03)00008-6

## Description

La présente invention concerne le domaine des matériaux de construction, et plus particulièrement concerne de nouvelles compositions pour matériaux de construction, leurs procédés associés et leurs utilisations pour la réalisation notamment d'éléments ou modules de construction.

### ÉTAT DE LA TECHNIQUE

Le ciment, tel que le ciment Portland, est un matériau très utilisé dans le domaine de la construction. Cependant ce ciment, bien que performant, nécessite, pour sa fabrication, d'une part, la consommation de nombreuses ressources et, d'autre part, produit une quantité non négligeable de polluants responsables, entre autres, du réchauffement climatique et des pluies acides. Enfin, sa durée de vie, bien que longue, est limitée par les multiples dégradations, notamment liées à la pollution atmosphérique, qu'il peut subir au cours du temps. Toutes ces particularités font que le ciment Portland s'inscrit de moins en moins dans une démarche de développement durable.

II existe des alternatives aux matériaux de construction classiques mais elles ne répondent que partiellement aux exigences de performances nécessaires, De plus, leur coût économique élevé se révèle souvent une limite à une large utilisation.

Par exemple les géopolymères ont été inventés vers la fin des années 70 par le professeur Davidovits. Leurs propriétés en termes de durabilité, de performances mécaniques et de développement durable ont récemment mis ces liants de nouvelle génération sur le devant de la scène.

Un géopolymère est formé à partir d'une matrice minérale composée de silice et d'alumine présentant des sites réactionnels sur lesquels on fait réagir des agents de réticulation contenus dans une solution dite d'activation, généralement alcaline. Cette réaction produit un gel à base de poly(silico-oxo-aluminate) qui enrobe les granulats et durcit au fur et à mesure de l'avancement réactionnel, jusqu'à l'obtention d'un bloc monolithique composé d'un « verre » dans lequel sont englobés les granulats. Cependant les procédés de réalisation de ces géopolymères sont soit peu adaptables industriellement et/ou utilisent des produits coûteux. Les réactions s'effectuent généralement avec chauffage des constituants.

Un exemple de fabrication à température ambiante de ciment géopolymérique à base de cendres volantes silico-alumineuses (dites de classe F) est décrit dans le brevet EP 2061732 B1 de J. Davidovits. Cependant le matériau de base, les cendres volantes silico-alumineuses (dites de classe F), issues de centrales thermiques à charbon, est un matériau peu disponible en France.

Dans une autre demande de brevet plus récente FR 2966823 du même inventeur est décrit un procédé de fabrication d'un liant ou ciment géopolymère comprenant une première étape de traitement d'éléments géologiques riches en oxydes de fer et en ferro-kaolinite à une température de 600 à 850 °C pendant plusieurs heures, au cours de laquelle la ferro-kaolinite devient du ferro-métakaolin, puis dans une seconde étape de les faire réagir avec un milieu réactionnel de type Ca-géopolymérique à température ambiante ou inférieure à 85°C. Les exemples de ce document indiquent que le précurseur géopolymérique qu'est ici le ferro-métakaolin est préparé lors d'un traitement thermique long (calcination à 750 °C pendant 3 heures, suivie d'un broyage) et donc très consommateur d'énergie.

Par ailleurs le document US 2012/0192765 A1 présente des formulations de géopolymère basées sur un métakaolin M1200S produit selon le procédé AGS de four flash. Ce document divulgue notamment un ciment géopolymère comprenant (a) un métakaolin ou un mélange d'un métakaolin et d'une solution d'aluminosilicate non-activé thermiquement, et (b) une solution d'activation de silicate alcalin. Les caractéristiques de calcination sont indiquées dans le brevet comme étant une chambre de température 900 à 1000°C portant le kaolin à 750 à 850°C pendant un temps très court (non précisément indiqué dans ce texte).

Ce métakaolin M1200S présente une grande réactivité mais son mode de calcination flash produit un métakaolin très fin (le paragraphe [0024] indique une D50 entre 1 et 2 µm) présentant notamment une très forte demande en eau (1650 g/kg au cône de Marsh, selon la fiche technique). La quantité nécessaire de solution d'activation est donc notoirement élevée : en particulier un ratio (M20+SiO2)/matrice de 11,3 mol/kg (pour la formulation « ex1 ») et de 10,6 mol/kg avec une forte utilisation de superplastifiant (pour la formulation « ex14 »). (voir plus loin les tableaux comparatifs).

Or, la solution d'activation, contenant de la soude et du silicate de sodium, représente une proportion importante du coût économique et de l'impact environnemental. Ainsi la production d'une tonne de soude nécessite plus de 20 MJ d'énergie et 1,3 T eq CO₂ d'impact carbone responsable du réchauffement climatique. De plus, la soude représente, du fait de sa corrosivité importante, le constituant le plus dangereux dans les formulations de géopolymères. Enfin, la solution d'activation, de par sa teneur en éléments salins est responsable des effets d'efflorescences observés sur les géopolymères. Il convient donc de limiter au minimum les quantités de solutions d'activations dans les formulations.

La présente invention a pour but de pallier les inconvénients de l'art antérieur en proposant une composition pour matériau de construction à partir de matériaux facilement disponibles et réactifs, et à faible impact écologique : notamment ne nécessitant pas de traitement thermique long et coûteux.

Un autre but de l'invention a pour but de proposer une composition pour matériau de construction avec une quantité réduite, voire une absence de ciment ou de clinker, pouvant servir à la confection de divers modules ou éléments de construction, par moulage ou extrusion.

Un autre but de l'invention est de proposer une composition pour matériau de construction pouvant être mise en œuvre dans un procédé de fabrication de modules ou éléments de construction en mélange avec de l'argile crue, sans nécessiter de cuisson.

### DESCRIPTION DE L'INVENTION

A cet effet, la présente invention propose une composition pour matériau de construction comprenant une matrice renfermant majoritairement un composé à base d'un métakaolin, et une solution d'activation alcaline, cette composition est caractérisée en ce qu'elle renferme une proportion massique en ciment ou clinker inférieure à 10 %, de préférence inférieure à 5 %, de préférence encore inférieure à 1 % en poids, et en ce que le métakaolin est un métakaolin « flashé » (c'est-à-dire obtenu par calcination flash d'une argile en poudre à une température comprise entre 600 et 900 °C pendant quelques secondes, suivie d'un refroidissement rapide), et en ce que la solution d'activation alcaline comprend une source de silicate de sodium ou de potassium (selon la nomenclature cimentière renfermant SiO2 et M2O), et une base alcaline, telle que NaOH et/ou KOH, (notée M₂O selon la nomenclature cimentière, M pouvant représenter le sodium ou le potassium), les proportions relatives de la solution d'activation et de la matrice étant telles que la somme totale en moles SiO2 + M2O de la solution d'activation est comprise entre 3,5 et 5,5 mol/kg de matrice et dans laquelle la solution d'activation alcaline présente un rapport molaire global SiO2 /M2O compris entre 1,25 et 1,65.

Le métakaolin flash (appelé aussi métakaolin flashé) est obtenu par calcination flash d'une argile en poudre à une température comprise entre 600 et 900 °C pendant quelques secondes, suivie d'un refroidissement rapide, au contraire du métakaolin « classique » qui est obtenu par calcination dans un four rotatif pendant au moins 5 heures. Sa fabrication nécessite beaucoup moins d'énergie, est un procédé à faible émission de CO₂ et est moins complexe que celui du métakaolin classique puisque la période de chauffe ne dure que quelques secondes et aucun broyage postérieur n'est nécessaire. De plus, la préparation de l'argile avant le traitement thermique est minimale. Son impact environnemental est donc plus faible et son coût est moins élevé.

Il s'avère que ce métakaolin flash est très réactif. Les inventeurs ont constaté que la demande en eau (inférieure à 600 g/kg mesurée au cône de Marsh) et en réactifs activateurs est beaucoup moins importante lorsqu'on utilise le métakaolin flashé, de l'ordre d'au moins 50% en réactif activateur par rapport aux métakaolins classiques. (voir ci-après le tableau comparatif n°2)

Le métakaolin flash est jusqu'à maintenant utilisé comme additif dans les compositions cimentaires en proportions massiques minoritaires (inférieures à 20 %) avec du ciment Portland par exemple.

Les inventeurs ont découvert de manière surprenante qu'un tel métakaolin flash peut réagir à température ambiante (inférieure à 30°C) avec la solution d'activation alcaline en donnant des matériaux aux propriétés intéressantes, comme cela décrit plus loin.

La solution d'activation alcaline comprend avantageusement une source de silicate de sodium ou de potassium (selon la nomenclature cimentière renferme SiO2 et M2O), et une base alcaline, telle que NaOH et/ou KOH, (selon la nomenclature cimentière de formule M2O, M pouvant représenter le sodium ou le potassium).

Selon la présente invention, la solution d'activation alcaline présente un rapport molaire global compris entre 1,25 et 1,65. Les solutions d'activation utilisées en géopolymérisation sont généralement définies par leur ratio silice/alcalin.

Lorsque la présente invention est réalisée avec des solutions d'activation avec des ratios molaires silice /alcalin (notés SiO2/M2O) compris entre 1,25 et 1,65 on constate une plus faible propension au phénomène d'efflorescence qu'avec les formulations avec le ratio molaire inférieur à 1,2, voire inférieur à 1, des géopolymères de l'art antérieur. Ce qui est un avantage technique important. De plus, les solutions à fort ratio sont plus stables et plus simples à utiliser.

Selon une variante avantageuse de l'invention, la base alcaline de la solution d'activation alcaline est une solution aqueuse de soude NaOH. Les exemples mentionnés plus loin dans la description montrent qu'il n'est pas nécessaire d'utiliser une solution de soude très concentrée.

Dans la composition selon l'invention, la matrice peut comprendre, mélangé(s) au métakaolin flashé, un métakaolin non flashé, un ou plusieurs matériaux minéraux pulvérulents (c'est-à-dire de granulométrie avantageusement inférieure à 200 µm) qui peuvent être choisis parmi le laitier de haut fourneau, les cendres volantes de classe F, des rebuts de fabrication de chamotte et/ou de métakaolin, la wollastonite, la poudre de terre cuite, issue, en particulier de rebuts de fabrication de briqueterie, les poudres minérales présentant une activité pouzzolanique, la poudre de verre recyclée, le calcin, les cendres volantes de classe C ou la chaux éteinte.

En ce qui concerne les concentrations massiques des matériaux pulvérulents mélangés à au moins 20 % de métakaolin dans ladite matrice, ces concentrations sont avantageusement les suivantes :
- inférieures ou égales à 80 %, de préférence inférieures à 60 % et de préférence encore inférieures à 50 % pour le laitier de haut fourneau, les cendres volantes de classe F, les rebuts de fabrication de chamotte et/ou de métakaolin, la wollastonite et la poudre de terre cuite,
- inférieures ou égales à 40 %, de préférence inférieures à 25 % pour les poudres minérales présentant une activité pouzzolanique, la poudre de verre recyclée, le calcin ou les cendres volantes de classe C,
- et inférieures ou égales à 15 %, de préférence inférieures à 10 %, de préférence encore inférieures ou égales à 5 % pour la chaux éteinte.

Selon un mode de réalisation avantageux de la composition de l'invention, la matrice comprend du métakaolin flashé et du laitier de haut fourneau en une concentration massique en laitier inférieure ou égale à 30 % du poids total de la matrice.

De manière préférée, les proportions relatives de la solution d'activation et de la matrice sont telles que la somme totale en moles SiO2 + M2O de la solution d'activation est comprise entre 4,5 et 5,5 mol/kg de matrice, de préférence entre 4,5 et 5,3 mol/kg de matrice.

La solution d'activation peut être une solution d'activation prête à l'emploi, telle que la solution d'activation de la catégorie GEOSIL (commercialisée par la société WOELLNER). L'avantage est une simplification de la mise en œuvre puisque la solution d'activation n'a plus besoin d'être préparée sur site.

La composition selon l'invention peut en outre renfermer un ou plusieurs adjuvants, tels qu'un superplastifiant (par exemple de type polyacrylate ou lignosulfonate), un agent hydrofuge (par exemple des carboxylates lourds de calcium, ou à base de silicone), un agent rétenteur d'eau ou un agent anti-retrait. Par adjuvant on entend un ajout, notamment de nature organique, en vue de modifier certaines propriétés de base, dans des proportions inférieures à 5 % en poids de la composition. La composition peut en outre comprendre des colorants ou des pigments.

La composition selon l'invention peut également renfermer un ou plusieurs additifs minéraux en poudre, choisi parmi le kaolin, l'argile crue en poudre, l'oxyde de zinc, le plâtre, le ciment alumineux fondu, le dioxyde de titane, un liant ettringitique, un fluorosilicate tel que l'hexafluorosilicate de sodium, en vue de modifier certaines propriétés de base, en concentration de préférence inférieure à 20 parties en poids, de préférence encore entre 0,5 et 10 parties en poids, pour 100 parties en poids de la matrice.

L'argile crue en poudre peut comprendre majoritairement de la kaolinite ou de la montmorillonite.

La présente invention concerne également divers procédés de réalisation d'un matériau de construction à partir de la composition de base décrite ci-dessus. Plus particulièrement :
un procédé de réalisation d'un matériau de construction comprenant le mélange des constituants de ladite composition avec :
i. des granulats choisis parmi des fillers, des poudres, du sable, des gravillons des graviers, et/ou des fibres, et éventuellement des pigments.

La présente description décrit également divers procédés de réalisation d'un matériau de construction à partir de la composition de base décrite ci-dessus. Plus particulièrement :
- un procédé de réalisation d'un matériau de construction comprenant le mélange de ladite composition avec de l'argile crue, de préférence dans des proportions pouvant aller jusqu'à 70 % en poids, de préférence encore jusqu'à 60 % en poids du matériau, et extrusion à froid ou moulage à froid dudit mélange ; l'obtention du matériau s'effectue sans cuisson, au contraire des matériaux classiques à base d'argile crue qui nécessitent une cuisson à une température de l'ordre de 900 à 1 100 °C,
- un procédé de réalisation d'un matériau de construction comprenant le mélange de ladite composition avec des « granulats » ou fibres d'origine végétale, telles que la sciure, les copeaux et les fibres de bois, la paille, la chènevotte, le lin, le liège ou la perlite ;
- un procédé de réalisation d'un matériau de construction expansé comprenant le mélange de ladite composition avec un agent expansif ou moussant, tel que de la poudre d'aluminium, avantageusement en présence d'agent stabilisant.

Tous ces procédés peuvent être mis en œuvre à des températures comprises entre 0°C et 30 °C environ, sans nécessiter de traitement thermique.

Plus précisément, la matrice, réalisée à partir des composants présentés ci-dessus, est mélangée avec la solution d'activation, elle-même préparée selon la formule indiquée. L'ensemble des deux constitue alors la composition selon l'invention, se présentant sous la forme d'un liquide épais, qui est ensuite mélangée avec un ou plusieurs composés neutres tels que les granulats ou les fibres, dont elle va constituer le liant. Les additifs ou adjuvants, ajoutés dans le mélange, permettent de lui conférer certaines propriétés particulières complémentaires. Ce liant, ressemblant à une résine, permet après réaction, de former avec les « granulats » et les « additifs » un assemblage monolithique cohérent présentant des propriétés nouvelles par rapport aux matériaux de l'art antérieur, notamment un temps de prise court, un très faible retrait dimensionnel, un aspect de surface brillant.

La présente invention porte également sur les multiples utilisations possibles de ladite composition selon l'invention ou des procédés décrits ci-dessus, et notamment :
l'utilisation de ladite composition ou dudit procédé pour :
   i. la réalisation d'éléments de revêtement, en particulier des revêtements de sols, tels que des carreaux, dalles, pavés ou bordures, des revêtements de murs, tels que des éléments de façade intérieures ou extérieures, des plaquettes de parement, des éléments de bardage, ou des revêtements de toitures de type tuiles, pour la réalisation de modules de construction extrudés ou moulés, telles que des briques, ou pour la réalisation de formes extrudées variées ; ou
   ii. la réalisation de matériaux composites, tels que des panneaux de construction de type panneaux préfabriqués, de blocs préfabriqués tels que des linteaux de porte ou de fenêtre, des éléments de murs préfabriqués, ou tout autre élément de construction préfabriqué ; ou
l'utilisation de ladite composition :
   iii. avec un agent expansif ou moussant pour la réalisation de modules d'isolation, tels que des panneaux de cloisons, ou des modules de construction isolants légers (de masse volumique inférieure à 1 ,5 kg/L, de préférence inférieure à 1 ,2 kg/L, de préférence encore inférieure à 1 ,0 kg/L, de préférence encore inférieure à 0,7 kg/L) ; ou
   iv. pour la réalisation par fabrication additive, telle qu'au moyen d'une imprimante 3D, d'éléments de construction, de bâtiments ou de maisons, ou d'objets de décoration ; ou
   v. sous la forme d'un système bi-composant avec soit d'une part les constituants sous forme solide, et d'autre part les constituants sous forme liquide, soit les constituants sous la forme de deux pâtes, pour la réalisation de mastic, colle ou mortier de scellement.

La présente description décrit également sur les multiples utilisations possibles de ladite composition selon l'invention ou des procédés décrits ci-dessus, et notamment :
- l'utilisation de ladite composition ou dudit procédé pour la réalisation de matériaux composites, tels que des panneaux de construction de type panneaux préfabriqués, de blocs préfabriqués tels que des linteaux de porte ou de fenêtre, des éléments de murs préfabriqués, ou tout autre élément de construction préfabriqué ;
- l'utilisation de ladite composition avec un agent expansif ou moussant pour la réalisation de modules d'isolation, tels que des panneaux de cloisons, ou des modules de construction isolants légers (de masse volumique inférieure à 1,5 kg/L, de préférence inférieure à 1,2 kg/L, de préférence encore inférieure à 1,0 kg/L, de préférence encore inférieure à 0,7 kg/L) ;
- l'utilisation de ladite composition pour la réalisation par fabrication additive, telle qu'au moyen d'une imprimante 3D, d'éléments de construction, de bâtiments ou de maisons, ou d'objets de décoration ; ou encore
- l'utilisation de ladite composition sous la forme d'un système bi-composant avec soit d'une part les constituants sous forme solide, et d'autre part les constituants sous forme liquide, soit les constituants sous la forme de deux pâtes, pour la réalisation de mastic, colle ou mortier de scellement, par exemple pour injection à partir d'appareil de type pistolet à cartouches renfermant chacune une partie des composants de la composition finale.

Ces deux dernières utilisations sont très difficiles à mettre en œuvre à partir de compositions à base de ciment du fait de la réaction d'hydratation de ce matériau dès son mélange avec l'eau, nécessitant la synchronisation entre l'ajout d'eau, le mélange et le dépôt de la pâte.

La présente invention va maintenant être décrite plus en détail et illustrée par les exemples, non limitatifs, ci-après.

### EXEMPLES

Dans les exemples, les abréviations du tableau 1 sont utilisées pour la composition de la matrice :

**Tableau 1**

| Abréviation | Composant |
|---|---|
| MKF | Métakaolin flash |
| LHF | Laitier granulé de haut fourneau |
| CVS | Cendres volantes de classe F |
| CFX | Rebut de fabrication de Chamotte |
| CHX | Chaux Eteinte |
| WLS | Wollastonite |
| CCL | Poudre de verre |

Le métakaolin forme le socle à partir duquel la formulation est établie. Plusieurs types de métakaolin existent sur le marché. Le tableau 2 ci-dessous présente quelques métakaolins typiques.

**Tableau 2**

| | MKF N | MKF B | CFX | M1200S | M1000 | M501 |
|---|---|---|---|---|---|---|
| Nom commercial | Argicem | Argicem blanc | Chamotte FX | Argical M1200S | Argical M1000 | Metastar M501 |
| Fournisseur | Argeco | Argeco | Imerys | Imerys | Imerys | Imerys |
| Procédé | Calcination Flash | Calcination Flash | Coproduit de fabrication | Four flash AGS | Four rotatif | Four rotatif |
| Couleur | Saumon | Blanc cassé | Gris clair | Blanc 74 | Blanc 73 | Blanc 83 |
| D50 (µm) | 20-40 | 20-40 | NA | 1-2 | 10-20 | 1-2 |
| Densité vrac (kg/m3) | 700 | 560 | NA | 250 | 550 | 350 |
| Indice Chapelle (mg Chaux/g) | 800 | 800 | NA | 1400 | 1000 | 1000 |
| Demande en eau (g/kg) | <600 | <600 | NA | 1650 | 900 | NA |

| | | | | | | |
|---|---|---|---|---|---|---|
| (NA : non applicable ou non déterminé) (demande en eau : mesurée au cône de Marsh) | | | | | | |

La chamotte FX est un coproduit de fabrication, il s'agit des poussières émises lors de la fabrication de métakaolin ou de chamotte dans un four rotatif. Ces poussières sont captées par un système de filtration et conditionnées. En tant que « quasi déchet », elles ont un impact environnemental très faible et un coût économique compétitif.

Les deux métakaolins Argeco sont produits selon le procédé, de la société Argeco Développement, de flashage décrit précédemment. Produits à partir d'une argile impure selon un procédé peu consommateur en énergie, leur impact environnemental et leur coût sont faibles.

Les métakaolins Metastar 501 et Argical M1000 sont produits à partir d'une kaolinite très pure selon le procédé classique de calcination en boulet dans un four rotatif et broyage. Ils sont bien plus coûteux que les produits précédents.

Enfin l'Argical M1200S est produit à partir d'une kaolinite très pure, séchée et broyée, dans un four dit flash selon le procédé d'Imerys. Ce procédé est différent du procédé Argeco et ne comporte pas d'étape de refroidissement rapide (de type trempe). Le produit final est très coûteux du fait de sa pureté et du procédé de fabrication. La réactivité à la chaux est cependant très élevée.

Le tableau 3 ci-dessous présente les résultats des tests de réactivité des différents types de métakaolin. Ce test est réalisé selon un protocole simple : à une quantité donnée de métakaolin est ajoutée une quantité suffisante de solution d'activation (silicate de sodium type N et soude à 32%, avec un ratio molaire SiO2/Na2O de 1,15) puis une quantité donnée de granulats fins (sable et filler). Le mortier obtenu doit être assez liquide et il n'y a aucune optimisation granulaire pour bien distinguer les performances du métakaolin.

**Tableau 3**

| Type Métakaolin | MKF N | MKF B | CFX | M1200S | M1200S | M1000 | M501 |
|---|---|---|---|---|---|---|---|
| Qté Métakaolin (g) | 100 | 100 | 100 | 100 | 100 | 100 | 100 |
| Qté Solution d'activation (g) | 100 | 120 | 100 | 220 | 100 | 130 | 210 |
| Qté Granulats (g) | 200 | 200 | 200 | 200 | 200 | 200 | 200 |
| Qté Eau (g) Complémentaire | 0 | 0 | 0 | 0 | 75 | 0 | 0 |
| X/M (mol/kg) | 4,9 | 5,9 | 4,9 | 10,8 | 4,9 | 6,4 | 10,3 |
| R_{c} à 28 jours (MPa) | 35 | 23 | 25 | 27 | <1 | 35 | 28 |

Le tableau 3 montre que le métakaolin de type MKF N (Argicem) présente les meilleures performances mécaniques pour une quantité de solution d'activation inférieure.

La granulométrie et la demande en eau particulière des métakaolins Argical M1200S et Metastar 501 ont pour conséquence de nécessiter une quantité de catalyseur (c'est-à-dire solution d'activation alcaline) très importante. A quantité de catalyseur équivalente, la rhéologie liée à l'utilisation de M1200S oblige à rajouter une quantité importante d'eau par rapport au MKF N, ce qui dilue le catalyseur et inhibe complètement la réaction.

La solution d'activation représente une part non négligeable du prix et de l'impact environnemental, les formulations à base de métakaolin MKF N et CFX présentent donc les coûts et les impacts environnementaux les plus faibles.

Les formulations des exemples ci-après sont principalement basées sur le MKF N d'Argeco et le CFX d'Imerys.

Le métakaolin « flashé » utilisé MKF N de marque ARGICEM^{®} de la société Argeco Développement est un produit présentant une surface spécifique BET élevée (entre 5 et 16 m²/g (NF ISO 9277). Sa granulométrie moyenne est de D50 = 20-30 µm selon la norme NF P 18-513 et il présente une faible demande en eau comprise entre 300 et 500 g/kg (mesurée selon la méthode au cône de Marsh).

Dans tous les exemples ci-après le silicate alcalin ainsi que la base alcaline sont en solution aqueuse, leurs concentrations sont exprimées en % massique dans cette solution. La plupart du temps aucun autre ajout d'eau que l'eau de ces solutions constituant la solution d'activation n'est nécessaire. La quantité d'eau est donc la plus réduite possible. Le rapport massique eau E sur matières sèches totales MSR de la composition liante (dénommée ici « résine », ou liant) est de préférence inférieur à 1, mais variable selon le type de matrice. Par exemple E/MSR est avantageusement inférieur à 0,6 pour une matrice constituée de métakaolin flashé seul, et un rapport E/MSR voisin de 0,8 pour une matrice renfermant un mélange de métakaolin flashé et de métakaolin non flashé.

### Exemple 1 :

Le tableau 4 ci-après présente des compositions variées selon l'invention : FR01-FR09 et FR11 (l'exemple FR10 est comparatif), avec indication du ratio molaire SiO2/M2O de la solution d'activation et indication du ratio X/M en mol/kg (somme totale en moles SiO2 + M2O de la solution d'activation par kg de matrice).

Les performances mécaniques, obtenues après mélange de la composition liante (dénommée ici « résine », ou liant) avec les granulats, puis moulage et temps de maturation à une température de 20°C sont données en termes de résistance à la compression pour un cylindre de 40 mm de diamètre pour 80 mm de hauteur. Contrairement aux formules données plus loin dans les applications, les granulats utilisés dans ces formules n'ont qu'un rôle de remplissage neutre et leur empilement n'était donc pas optimisé.

Tempo 12 est un réducteur d'eau commercialisé par la société Sika, de type polyacrylate.

Le sable fin est du sable fin de Fontainebleau de granulométrie inférieure ou égale à 1 mm, la poudre fine de calcaire est de granulométrie inférieure à 200 µm.

Dans cet exemple la prise (setting < 24h) a été estimée visuellement.

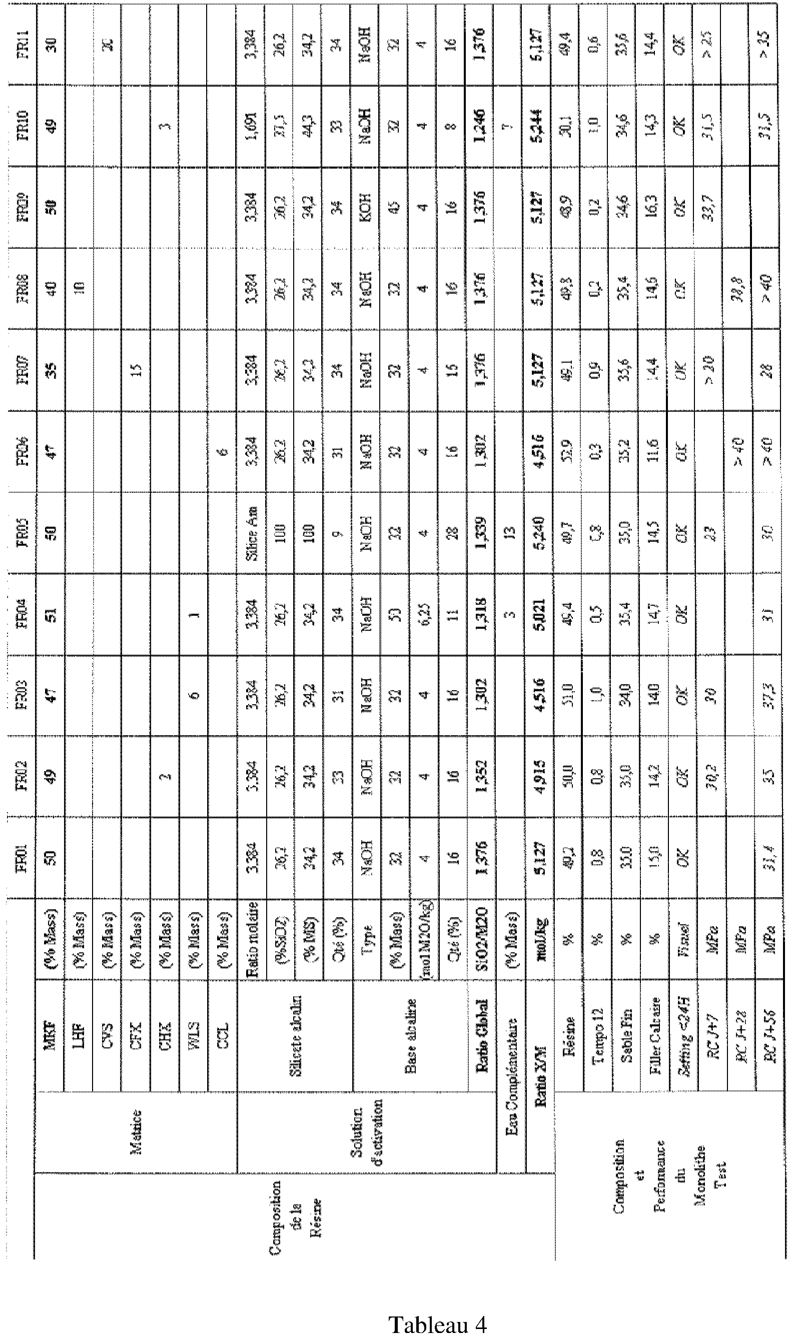

### Exemple 2 :

Le tableau 5 ci-après présente des formulations FR-N1 et FR-N2 qui présentent des performances moindres que celles de l'exemple 1. Il a été constaté que la composition de résine FR_N1 est très alcaline et produit des efflorescences, et la composition FR-N2 avec un ratio X/M supérieur à 2 présente une faible résistance mécanique (Rc à 28 jours < 5 MPa). Cet exemple montre l'importance des ratio préférés SiO2/M2O et X/M, pour améliorer les propriétés des matériaux préparés à partir de la composition selon l'invention et leurs performances.

**Tableau 5**

| | | | | FR_N1 | FR_N2 |
|---|---|---|---|---|---|
| Composition de la Résine | Matrice | MKF | | **50** | **40** |
| | | CVS | | | 10 |
| | Solution d'activation | Silicate alcalin | Ratio molaire | 3,384 | 3,384 |
| | | | (%SiO2) | 26,2 | 26,2 |
| | | | %) | 34,2 | 34,2 |
| | | | Qté (%) | 10 | 13 |
| | | Base alcaline | Type | NaOH | NaOH |
| | | | (%) | 32 | 32 |
| | | | (mol M2O/kg) | 4 | 4 |
| | | | Qté (%) | 40 | 7 |
| | | Ratio Global | SiO2/M2O | 0,253 | **1,268** |
| | Eau Complémentaire | | | | 30 |
| | Ratio X/M | | mol/kg | **4,331** | 2,031 |

Les exemples suivants présentent diverses applications (non limitatives) mettant en œuvre la composition de base selon la présente invention.

### Exemple 3 : blocs de construction

Afin de produire des éléments de construction tels que, par exemple, parpaings, bordure ou autres éléments préfabriqués, la composition selon l'invention est mélangée avec des granulats de type filler, sables, gravillons et graviers de manière optimale en respectant les règles de formulation typiques pour obtenir un empilement granulaire présentant une compacité maximale.

Le tableau 6 ci-dessous donne deux formulations typiques de mortier (HP2A-B1 et HP2A-B2 réalisées avec sable normalisé (ISO 679 :2003, suivant la norme EN 196-1) ainsi qu'une comparaison avec un mortier à base de ciment Portland (colonne de gauche). Les performances mécaniques ainsi que les impacts environnementaux sont indiqués.

**Tableau 6**

| | | | Ciment | HP2A_B1 | %Diff vs. Ciment | HP2A_B2 | %Diff vs. Ciment |
|---|---|---|---|---|---|---|---|
| Formulation | Ciment Portland CEM 1525N | Quantité (g) | 450 | | | | |
| | Métakaolin Flashé | Quantité (g) | | 211 | | 138 | |
| | Laitier Granulé Haut Fourneau | Quantité (g) | | 91 | | 138 | |
| | Silicate de Sodium | Ratio Molaire | | 3,384 | | 3,384 | |
| | | Concentration (%) | | 34,2 | | 34,2 | |
| | | Quantité (g) | | 196 | | 192 | |
| | Hydroxyde de Sodium | Concentration (%) | | 30 | | 30 | |
| | | Quantité (g) | | 106 | | 82 | |
| | Eau | Quantité (g) | 225 | | | | |
| | Sable Normalisé | Quantité (g) | 1350 | 1350 | | 1350 | |
| | Paramètres Résine HP2A | Ratio Global SiO2/M2O | NA | 1,316 | | 1,610 | |
| | | Ratio X/M (mol/kg) | NA | 4,988 | | 5,049 | |
| Performances | Setting 2H | Qualitatif | Faible | Medium | | Fort | |
| | Setting 12H | Qualitatif | Medium | Fort | | Fort | |
| | Résistance à la compression | Après 28 jours (20°C) | > 40 MPa | > 40 MPa | | > 40 MPa | |
| Impacts Environnementaux Pour 1 T béton produit | Energie Total | M1 | 1103 | 1067 | -3,2 | 944 | -14,4 |
| | Equivalent Pétrole | TEP | 0,0263 | 0,0255 | -3,2 | 0,0225 | -14,4 |
| | MP Global ADP (hors énergie) | kg Sb | 0,0281 | 0,0182 | -35,3 | 0,0170 | -39,8 |
| | Réchauffement climatique | kg CO2 eq | 201,7 | 75,0 | -62,8 | 68,5 | -66,1 |
| | Acidification | kg SO2 eq | 0,5441 | 0,4469 | -17,9 | 0,4232 | -22,2 |
| | Eutrophisation | kg PO4 eq | 0,0591 | 0,0345 | -41,6 | 0,0317 | -46,3 |
| | Ozone Photochimique | kg C2H4 eq | 0,0470 | 0,0418 | -11,2 | 0,0372 | -20,9 |
| | Human Toxicity | kg DCB eq | 0,6618 | 0,5596 | -15,4 | 0,5202 | -21,4 |

Dans les paramètres d'impact environnemental de ce tableau les significations sont : MP : matières premières ; ADP : Abiotic Depletion Potentiel ; Sb : antimoine ; Human toxicity kg DCB eq : toxicité pour l'Homme exprimée en équivalent de dichlorobenzène.

Les valeurs d'impact sont ici calculées à partir notamment des données de l'ADEME, de l'EPA américaine, des Analyses de Cycle de Vie des fournisseurs et de la Portland Cement Association. Un certain nombre de points ont néanmoins pénalisé la technologie de la présente invention dans les calculs de ce tableau : l'impact de l'eau n'a pas été compté pour la formule à base de ciment, la méthode de calcul par tonne de béton produit favorise la formule au ciment du fait de l'addition de l'eau et les données d'impact pour le réactif silicate de sodium datent d'avant 2000 pour une usine sans traitement de fumées. A l'heure actuelle, en Europe de l'ouest les usines de production de silicate de sodium ont été mises aux normes et ont sans doute beaucoup moins d'impact pour l'environnement. Malgré ces pénalités, on constate que l'impact environnemental d'un matériau réalisé selon l'invention est très inférieur à un matériau classique et notamment au niveau du CO₂.

### Exemple 4 :

Dans cet exemple sont présentées différentes formulations (HP2A-P01 à HP2A-P08) pour produire 1 kg de béton selon l'invention afin de créer notamment des éléments de construction de type parpaings à l'aide d'une presse, ou toute autre application utilisant une pâte de type béton. Les performances mécaniques sont également indiquées dans le tableau 7 regroupant ces formulations.

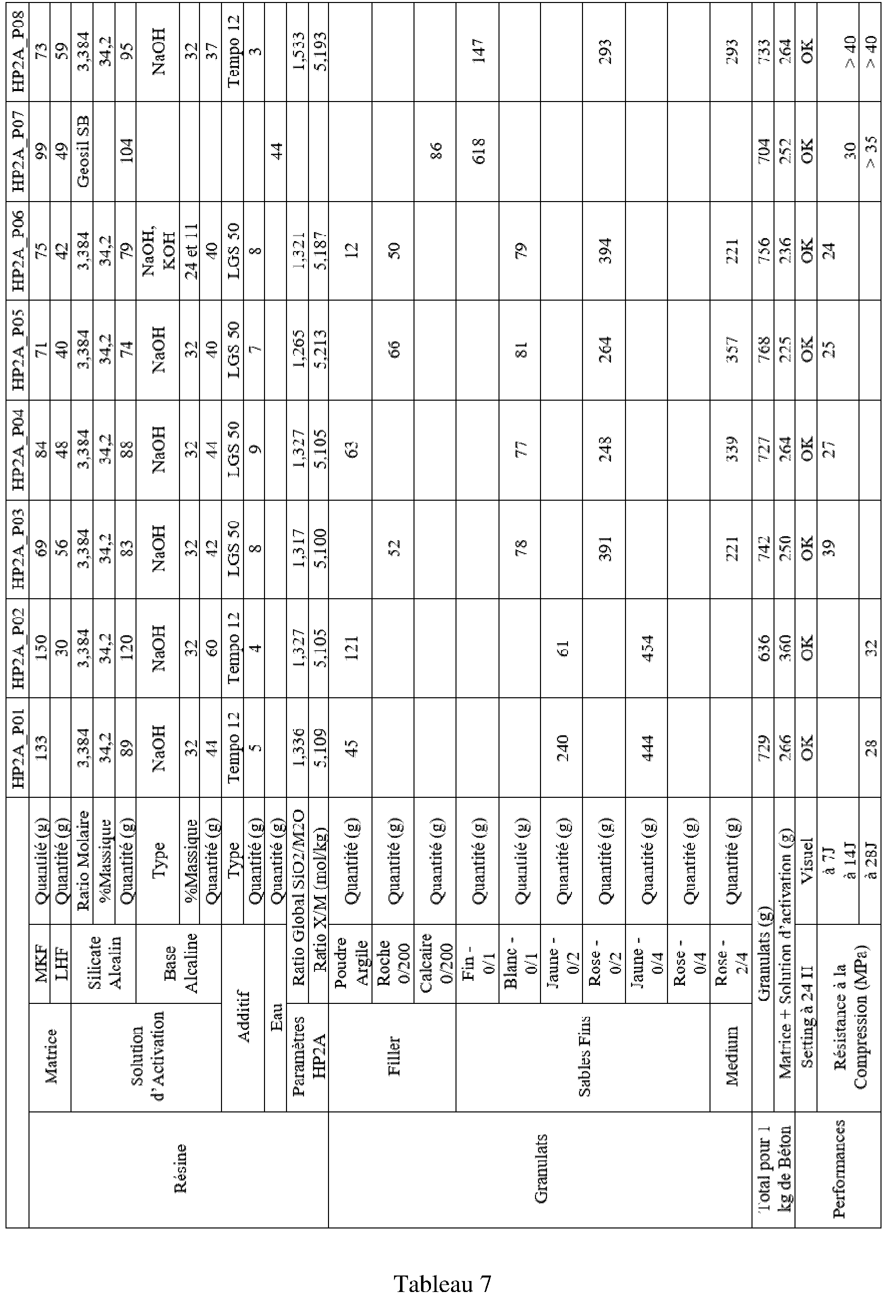

LGS 50 est une solution de marque TEMBEC de Lignosulfonate de Sodium à 50%.

Parmi les fillers testés, la poudre d'argile crue (non calcinée), la poudre de calcaire, ou la poudre de roche (porphyre) ont une granulométrie inférieure à 200 µm.

Pour les sables, différentes couleurs et granulométries (fin ou médium, exprimées en mm) ont été utilisées.

Par ailleurs, il a été constaté, de manière surprenante, que l'ajout de kaolinite ou de montmorillonite, en petite quantité par rapport à la matrice, par exemple quelques parties (moins de 10 parties) en poids pour 100 parties en poids de matrice, sous forme de poudre (granulométrie inférieure à 200 µm), contribue notamment à une forte augmentation des performances mécaniques. C'est le cas en particulier de la résistance à la compression qui atteint ou dépasse 30 MPa à 5 jours et dépasse 40 MPa à 28 jours dans les compositions HP2A- P12 et HP2A-P13 (en comparaison respectivement de 24 MPa à 5 jours et de 35 MPa à 28 jours pour une formulation sans ces additifs : HP2A-P11). Les résultats sont regroupés dans le tableau 8.

**Tableau 8**

| | | | | HP2A_P11 | HP2A_P12 | HP2A_P13 |
|---|---|---|---|---|---|---|
| Résine | Matrice | MKF | Quantité (g) | 147 | 147 | 147 |
| | Solution d'Activation | Silicate Alcalin | Ratio Molaire | 3,384 | 3,384 | 3,384 |
| | | | %Massique | 34,2 | 34.2 | 34.2 |
| | | | Quantité (g) | 97 | 97 | 97 |
| | | Base Alcaline | Type | NaOH | NaOH | NaOH |
| | | | %Massique | 32 | 32 | 32 |
| | | | Quantité (g) | 50 | 50 | 50 |
| | Additif | | Type | | Kaolinite | Montmorillonite |
| | | | Quantité (g) | | 12 | 12 |
| | Adjuvant (Tempo 12) | | Quantité (g) | 7 | 7 | 7 |
| | Paramètres HP2A | Ratio Global SiO2/M2O | | 1,303 | 1,303 | 1303 |
| | | Ratio X/M (mol/kg) | | 5,093 | 5,093 | 5,093 |
| Granulats | Filler | Roche 0/200 | Quantité (g) | 56 | 44 | 44 |
| | Sables fins | Fin - 0/1 | Quantité (g) | 66 | 66 | 66 |
| | | Rose - 0/2 | Quantité (g) | 369 | 369 | 369 |
| | Medium | Rose - 2/4 | Quantité (g) | 208 | 208 | 208 |
| Total pour 1 kg de Béton | Granulats (g) | | | 699 | 687 | 687 |
| | Matrice - Solution d'Activation (g) | | | 294 | 294 | 294 |
| Performances | Setting à 24 H | | Visuel | OK | OK | OK |
| | Résistance à la Compression (MPa) | | à 5J | 24 | 34 | 30 |
| | | | à 28J | 35 | > 40 | > 40 |

### Exemple 5 : fabrication de formes moulées

Grâce à son faible retrait dimensionnel, la composition selon l'invention permet de réaliser des moulages très précis de toutes formes rendant possible la fabrication en particulier de carreaux de grandes tailles, de tuiles moulées ou de diverses formes décoratives moulées. Si elle augmente la vitesse de prise, la présence de laitier de haut-fourneau augmente toutefois le retrait dimensionnel. Ce paramètre doit être pris en compte en cas d'utilisation éventuelle de formules contenant plus de 30% de laitier.

Le traitement de la surface des produits obtenus peut être réalisé après la prise afin d'obtenir, par exemple, un effet hydrofuge ou bien d'en augmenter la dureté. De même, la couleur peut être modifiée par ajout de pigments adaptés. Le tableau 9 ci-dessous donne deux exemples de formulations (HP2A-M01 et HP2A-M02) pouvant être utilisées pour des applications de ce type avec les résultats obtenus en termes de couleur, de dureté Mohs, d'effet perlant et de performances mécaniques.

L'abréviation « Pieri H 2000 » correspond à l'agent hydrofuge de surface, de la marque Grace, Pieri Hydroxi 2000 qui donne d'excellents résultats. Pour les coloris, toutes sortes de pigments minéraux peuvent être utilisés : oxydes de fer, ocres, etc...

**Tableau 9**

| | | | | HP2A_M01 | HP2A_M02 |
|---|---|---|---|---|---|
| Résine | Matrice | MKF | Quantité (g) | 186 | 105 |
| | | LHF | Quantité (g) | | 56 |
| | Solution d'Activation | Silicate | Ratio Molaire | 3,384 | 3,384 |
| | | | %Massique | 34,2 | 34,2 |
| | | | Quantité (g) | 124 | 107 |
| | | Alcalin | Type | NaOH | NaOH |
| | | | %Massique | 32 | 32 |
| | | | Quantité (g) | 62 | 52 |
| | Additif 1 | | Type | Tempo 12 | Tempo 12 |
| | | | Quantité (g) | 2 | 4 |
| | Pigment | | Type | | Charbon Actif |
| | | | Quantité (g) | | 25 |
| | Paramètres HP2A | Ratio Global SiO2/M2O | | **1,327** | **1,350** |
| | | Ratio X/M (mol/kg) | | **5,105** | **5,052** |
| Granulats | Filler | Poudre d'Argile | Quantité (g) | 125 | |
| | Fines | Blanc - 0/1 | Quantité (g) | | 93 |
| | | Jaune - 0/2 | Quantité (g) | 188 | |
| | | Rose - 0/2 | Quantité (g) | | 372 |
| | | Jaune - 0/4 | Quantité (g) | 313 | |
| | Medium | Rose - 2/4 | Quantité (g) | | 186 |
| % Globaux | Granulats | | | 626 | 651 |
| | Matrice + Solution d'Activation | | | 372 | 320 |
| Traitement Complémentaire de Surface | | Type | | Hydrofuge | Hydrofuge |
| | | Nom | | Pieri H 2000 | Pieri H 2000 |
| | | Mode | | Pulverisation | Pulvérisation |
| | | Dose (g/m2) | | 200 | 200 |
| Résultats Produit Fini | | Coloris | | Terre | Anthracite |
| | | Effet Perlant | | Excellent | Excellent |
| | | Dureté Mohs | | 3 | 3 |
| | | Setting 24H | | OK | OK |
| | | Resistance Compression (28J) | | 27 MPa | 35 MPa |

### Exemple 6 : fabrication d'éléments extrudés

La composition selon l'invention, du fait de sa compatibilité avec les argiles crues, permet de réaliser des formes par extrusion à froid. La vitesse de prise très rapide doit être prise en compte dans la conduite du procédé surtout en cas de présence de composants accélérateurs. Les formes pleines comme les formes creuses sont réalisables, la pâte à extruder ayant un comportement très proche des pâtes d'argile crues classiques.

Comme pour les autres applications, des pigments ou d'autres adjuvants peuvent être ajoutés en vue d'obtenir un effet particulier. Par ailleurs, après durcissement, les produits peuvent aussi subir un traitement de surface. Le tableau 10 donne deux exemples de formulations (HP2A-X01 et HP2A-X02) applicables en extrusion ainsi que les performances mécaniques obtenues.

**Tableau 10**

| | | | | HP2A_X01 | HP2A_X02 |
|---|---|---|---|---|---|
| Résine | Matrice | MKF | Quantité (g) | 168 | 181 |
| | | LHF | Quantité (g) | | 45 |
| | Solution d'Activation | Silicate Alcalin | Ratio Molaire | 3,334 | 3,384 |
| | | | %Massique | 34,2 | 34,2 |
| | | | Quantité (g) | 109 | 153 |
| | | Base Alcaline | Type | NaOH | NaOH |
| | | | %Massique | 32 | 30 |
| | | | Quantité (g) | 59 | 74 |
| | Additif | | Type | Tempo 12 | Tempo 12 |
| | | | Quantité (g) | 7 | 6 |
| | Paramètres HP2A | Ratio Global SiO2/M2O | | **1,264** | **1,407** |
| | | Ratio X/M (mol/kg) | | **5.075** | **5,058** |
| Granulats | Poudre Argile | | Quantité (g) | 285 | 541 |
| | Sable Fin Blanc - 0/1 | | Quantité (g) | 372 | |
| % Globaux de la Pâte à Extruder | Granulats | | | 65,7 | 54,1 |
| | Matrice + Solution d'activation | | | 33,6 | 45,3 |
| | Terre Crue | | | 28,5 | 54,1 |
| | Argiles Totaux | | | 45,3 | 72,2 |
| Performances | Setting à 24H | | Visuel | OK | OK |
| | Résistance à la Comprsssion (MPa) | | à 7J | > 30 | 28 |
| | | | à 28J | > 30 | > 30 |

| | | | | | |
|---|---|---|---|---|---|
| Les pourcentages sont des pourcentages massiques. | | | | | |

### Exemple 7 : fabrication de blocs expansés

Le procédé selon la présente invention permet la réalisation de blocs expansés en ajoutant à la pâte un réactif tel que la poudre d'aluminium, un agent moussant ainsi qu'un stabilisateur de mousse. La poudre d'aluminium est introduite juste avant la fin du malaxage. L'intérêt de partir d'une composition selon l'invention est notamment lié à la vitesse de prise qui permet d'éviter un étuvage.

Le tableau 11 donne trois exemples de formulations (HP2A-SP01 à HP2A-SP03) avec les résultats obtenus notamment les performances mécaniques et la masse volumique du produit fini (avant et après maturation).

La formulation HP2A-SP03 (colonne de gauche) inclut en outre de la sciure (médium : 1-5 mm environ) permettant d'obtenir un matériau composite renfermant des « granulats » végétaux.

**Tableau 11**

| | | | | HP2A_SP01 | HP2A_SP02 | HP2A_SP03 |
|---|---|---|---|---|---|---|
| Résine | Matrice | MKF | Quantité (g) | 180 | 120 | 330 |
| | | LHF | Quantité (g) | 70 | 80 | 120 |
| | Solution d'Activation | Silicate | Ratio Molaire | 3,384 | 3,384 | 3,384 |
| | | | %Massique | 34,2 | 34,2 | 34,2 |
| | | | Quantité (g) | 172 | 130 | 300 |
| | | Alcalin | Type | NaOH | NaOH | NaOH |
| | | | %Massique | 32 | 32 | 32 |
| | | | Quantité (g) | 83 | 70 | 150 |
| | Additif 1 | | Type | Tempo 12 | Triton X | Tempo 12 |
| | | | Quantité (g) | 4 | 2,5 | 6 |
| | Additif 1 | | Type | | Emulsion Stab | |
| | | | Quantité (g) | | 3,5 | |
| | Additif 1 | | Type | | Poudre Al | |
| | | | Quantité (g) | | 0,8 | |
| | Paramètres HP2A | Ratio Global SiO2/M2O | | **1,356** | **1,268** | **1,327** |
| | | Ratio X/M (mol/kg) | | **5,220** | **5,077** | **5,105** |
| Granulats | Poudre Argile | | Quantité (g) | 50 | | |
| | Perlite (ml) | | Volume (ml) | 1000 | | |
| | Sciure (Medium) | | Quantité (g) | | | 800 |
| | Poudre Calcaire 0/200µm | | Quantité (g) | | 400 | |
| Résultats | Masse Volumique | | kg/L | 1,1 | 0,9 | 1,8 |
| | Resistince à la Compression | | à 28J | > 10 MPa | > 5 MPa | 15 MPa |

### Exemple 8 : application pour colles et mastic

La composition selon l'invention peut être mise en œuvre sous la forme d'une formulation bi-composant à mélanger lors de l'emploi : deux exemples (HP2A-COL01 et HP2A-COL02) sont donnés dans le tableau 12, avec des composants A et B différents, ainsi que les exemples HP2A-COL03 et HP2A-COL04 dans le tableau 13.

Des applications pour colles, mastics, et mortiers de scellement sont ainsi tout à fait envisageables, avec une mise en œuvre très pratique pour l'utilisateur, comprenant la réaction par mélange des deux composants A et B sous formes de pâtes prêtes à l'emploi.

Le Geosil SB est une solution d'activation prête à l'emploi commercialisée par la société WOELLNER, renfermant le silicate alcalin et la base alcaline.

Calcaire : est ici une poudre fine de calcaire de granulométrie inférieure à 200µm ou 315 µm.

**Tableau 12**

| | | HP2A_COL01 | | HP2A_COL02 | |
|---|---|---|---|---|---|
| | | Composant A | Composant B | Composant A | Composants |
| Métakaolin Flashé | Quantité (g) | 100 | | | 50 |
| Laitier Haut Fourneau | Quantité (g) | | | | 50 |
| Silicate Alcalin | Ratio Molaire | 3,384 | | Geosil SB | |
| | % Massique | 34,2 | | | |
| | Quantité (g) | 65 | | 100 | |
| Base Alcaline | Type | | NaOH | | |
| | % Massique | | 30 | | |
| | Quantité (g) | | 35 | | |
| Additif | Type | Tempo 12 | Tempo 12 | Tempo 12 | Tempo 12 |
| | Quantité (g) | 1 | 2 | 2 | 2 |
| Eau | Quantité (g) | | | | 40 |
| Calcaire | Quantité (g) | | 100 | 100 | |
| Setting 24H | Visuel | Oui | | Oui | |
| Resistance à la Compression | à 28J | > 25 MPa | | > 30 MPa | |

Dans les deux exemples du tableau 12, le ratio global SiO₂/M₂O de la solution alcaline est de 1,25 et le rapport X/M est de 5,1 mole/kg de matrice.

Une autre formulation de colle selon l'invention est présentée dans le tableau 13 ci-après.

**Tableau 13**

| | | HP2A COL 03 | | HP2A COL 04 | |
|---|---|---|---|---|---|
| | | Poudre | Liquide | A | B |
| Formulation | MKF N | 291 | | 330 | |
| | Laitier | 72 | | | |
| | Silicate N | | 240 | 215 | |
| | Soude 32% | | 134 | | 109 |
| | Eau | | | | 7 |
| | Sika G-225 | 1 | | | |
| | Tempo 12 | | | 3 | 6 |
| | Calcaire 0/315 | 254 | | | 330 |
| | Kaolinite | 8 | | | |
| | Total | 626 | 374 | 548 | 452 |
| Propriétés | Setting à 20°C (h) | 5 | | 6 | |
| | R_{C} J+28 (MPa) | > 35 | | > 25 | |
| Solution alcaline | SiO2/M2O | 1,239 | | 1,316 | |
| | X/M (mol/kg) | 5,217 | | 5,007 | |

L'additif Sika ^{®} G-225 est un fluidifiant de type polycarboxylate.

L'additif Tempo12 est un super plastifiant à base de copolymère acrylique.

De telles « colles » 100 % minérales présentent l'avantage d'une ininflammabilité et une absence de Composés Organiques Volatils, par rapport aux colles renfermant des produits et/ou solvants organiques. Elles sont en outre compatibles avec les autres éléments de construction minéraux et permettent de réaliser, par exemple par injection au moyen de deux cartouches renfermant respectivement les composants A et B, une opération de type réparation, de jonction d'éléments de construction (scellement) ou d'enduction d'une surface.

### Exemple 9 : composition avec granulats légers

Les matériaux à basse densité tels que, par exemple, le chanvre, la fibre de bois, l'argile expansée, la pouzzolane ou la perlite sont poreux. Il en résulte très souvent un problème de cohésion lorsqu'ils sont liés avec un liant hydraulique. En effet, la migration de l'eau à l'intérieur du granulat diminue le rendement de la réaction de prise hydraulique notamment à l'interface entre le granulat et la phase liante. Or la réaction de géopolymérisation ne consomme pas mais produit de l'eau. La migration de l'eau vers les granulats ne produira donc pas ce manque de cohésion.

Les autres avantages des géopolymères sur cette application sont notamment les bonnes propriétés adhésives, le très faible retrait au séchage, l'inhibition de la moisissure et le caractère répulsif pour rongeurs et insectes (du fait de l'alcalinité et la présence de carbonates, ainsi que des capacités ignifuges très élevées.

Plusieurs formulations ont donc été testées en incluant de la chènevotte (chanvre), ou de la perlite. Le tableau 14 ci-dessous présente quelques exemples.

**Tableau 14**

| | | PERL02 | CHEN01 | CHEN03 |
|---|---|---|---|---|
| Liant | MKF N | 170 | 475 | 478 |
| | LHF | 100 | | 192 |
| | Silicate N | 170 | 295 | 430 |
| | Soude 30% | 100 | 185 | 162 |
| | Potasse 45% | | | 76 |
| | Tempo 12 | 4 | 5 | 7 |
| | Argile Sec Argilus | | 40 | 190 |
| Granulats | Perlite | 161 | | |
| | Chènevotte | | 195 | 270 |
| | Fibres de chanvre | | | 5 |
| Volume | Volume liant (ml) | 300 | 550 | 850 |
| | Volume granulat (ml) | 1000 | 1500 | 2150 |
| | Ratio Volumique liant/total | 0,23 | 0,27 | 0,28 |
| Ratio | SiO2/M2O | 1,25 | 1,20 | 1,28 |
| | RCM (mol/kg) | 4,95 | 4,98 | 5,00 |
| Propriétés | Masse Volumique (kg/L) | 850 | 650 | 680 |
| | RC J+28 (MPa) | 14 | | |
| | Inflammabilité (test au briquet) | non | non | non |

On constate donc que l'on peut obtenir des composites présentant de bonnes performances avec des volumes de liant faible, inférieurs à ce qui est habituellement pratiqué pour les liants classiques.

Pour le composite à base de perlite, la résistance à la compression est supérieure à un parpaing de classe B80 (8 MPa) et est largement suffisante pour que le bloc puisse être considéré comme porteur. Il y a donc une marge de manoeuvre pour insérer des espaces vides à hauteur de 50% dans un bloc réalisé selon la formule PERL02. On obtiendrait ainsi un bloc porteur, de classe comprise entre un B40 et B60, présentant une masse volumique apparente d'environ 400 kg/m³, c'est-à-dire plus de 2 fois inférieure à la masse volumique apparente d'un parpaing en béton B40 (900 kg/m3).

Les masses volumiques pour les blocs de chènevotte sont très satisfaisantes, les fibres de chènevotte sont bien solidaires de l'ensemble et résistent bien à l'arrachement, y compris aux angles. Leur solidité est suffisante pour construire des plaques d'isolation de grandes dimensions à visser ou coller.

En résumé, les tableaux 15 et 16 ci-après regroupent les différents avantages constatés par les inventeurs entre les matériaux obtenus par le procédé selon la présente invention et respectivement le procédé mettant en oeuvre le ciment Portland (tableau 15) et les procédés utilisant la terre cuite (tableau 16).

**Tableau 15**

| Propriétés | Ciment Portland | Invention |
|---|---|---|
| Temps de prise | > 3 h | 10 - 60 min |
| Temps pour obtenir 50% de Rc28J | 7 - 14 J | 1 - 2 J |
| Tenue au feu | 650°C | 1000°C |
| Effet ignifuge | Faible | Fort |
| Résistance aux ions sulfate | Faible | Très forte |
| Résistance aux ions chlorure | Moyenne | Très forte |
| Protection Anticorrosion des armatures acier | Moyen terme | Long terme |
| Retrait dimensionnel | Moyen | Très faible |
| Propriétés adhésives sur matériau pierre | Moyenne | Très forte |
| Capacité d'intégrer de l'argile dans les formulations | Très faible | Importante |
| Performances mécaniques avec matériaux organiques | Moyenne | Très bonnes |
| Capacité d'échange de vapeur d'eau | Faible | Importante |
| Aspect brillant de la surface | Non | Oui |
| Consommation en ressources naturelles (incluant énergie) | Moyenne | Faible |
| Impact environnemental (CO2, SO2, etc...) | Fort | Faible |

**Tableau 16**

| Propriétés | Terre cuite | Invention |
|---|---|---|
| Complexité de l'installation | Forte | Faible |
| Opération de fabrication | Cuisson | T° Ambiante |
| Compatibilité avec granulats variés (fibres végétales, ...) | Non | Oui |
| Variété des formes réalisables | Faible | Importante |
| Variété des couleurs réalisables | Faible | Importante |
| Retrait dimensionnel | Moyen | Très faible |
| Aspect brillant de la surface | Non | Oui |

## Revendications

1. Composition pour matériau de construction comprenant une matrice renfermant majoritairement un composé à base d'un métakaolin, et une solution d'activation alcaline, **caractérisée en ce qu'**elle renferme une proportion massique en ciment ou clinker inférieure à 10 %, **en ce que** le métakaolin est un métakaolin « flashé » obtenu par calcination flash d'une argile en poudre à une température comprise entre 600 et 900 °C pendant quelques secondes, suivie d'un refroidissement rapide, et **en ce que** la solution d'activation alcaline comprend une source de silicate de sodium ou de potassium (selon la nomenclature cimentière renfermant SiO2 et M2O), et une base alcaline, telle que NaOH et/ou KOH, (notée M2O selon la nomenclature cimentière, M pouvant représenter le sodium ou le potassium), les proportions relatives de la solution d'activation et de la matrice étant telles que la somme totale en moles SiO2 + M2O de la solution d'activation est comprise entre 3,5 et 5,5 mol/kg de matrice et dans laquelle la solution d'activation alcaline présente un rapport molaire global SiO2 /M2O compris entre 1,25 et 1,65.

2. Composition selon la revendication **1, caractérisée en ce qu'**elle renferme une proportion massique en ciment ou clinker inférieure à 5 %, de préférence inférieure à 1 %.

3. Composition selon la revendication **1** ou la revendication **2, caractérisée en ce que** la base alcaline de la solution d'activation alcaline est une solution aqueuse de soude NaOH.

4. Composition selon l'une quelconque des revendications **1** à **3, caractérisée en ce que** la matrice comprend, mélangé(s) au métakaolin flashé, un métakaolin non flashé, un ou plusieurs matériaux minéraux pulvérulents, c'est-à-dire de granulométrie avantageusement inférieure à 200 µm, choisis parmi le laitier de haut fourneau, les cendres volantes de classe F, des rebuts de fabrication de chamotte et/ou de métakaolin, la wollastonite, la poudre de terre cuite, issue, en particulier de rebuts de fabrication de briqueterie, les poudres minérales présentant une activité pouzzolanique, la poudre de verre recyclée, le calcin, les cendres volantes de classe C ou la chaux éteinte.

5. Composition selon la revendication **4, caractérisée en ce que** les concentrations massiques des matériaux pulvérulents dans ladite matrice, mélangés à au moins 20 % de métakaolin sont les suivantes :
- inférieures ou égales à 80 %, de préférence inférieures à 60 % et de préférence encore inférieures à 50 % pour le laitier de haut fourneau, les cendres volantes de classe F, les rebuts de fabrication de chamotte et/ou de métakaolin, la wollastonite et la poudre de terre cuite,
- inférieures ou égaies à 40 %, de préférence inférieures à 25 % pour les poudres minérales présentant une activité pouzzolanique, la poudre de verre recyclée, le calcin ou les cendres volantes de classe C,
- et inférieures ou égales à 15 %, de préférence inférieures à 10 %, de préférence encore inférieures ou égales à 5 % pour la chaux éteinte.

6. Composition selon la revendication **4** ou la revendication **5, caractérisée en ce que** la matrice comprend du métakaolin flashé et du laitier de haut fourneau en une concentration massique en laitier inférieure ou égale à 30 % du poids total de la matrice.

7. Composition selon l'une quelconque des revendications **1** à **6, caractérisée en ce que** les proportions relatives de la solution d'activation et de la matrice sont telles que la somme totale en moles SiO2 + M2O de la solution d'activation est comprise entre 4,5 et 5,5 mol/kg de matrice, de préférence entre 4,5 et 5,3 mol/kg de matrice.

8. Composition selon l'une quelconque des revendications **1** à **7, caractérisée en ce qu'**elle renferme un ou plusieurs adjuvants, tels qu'un superplastifiant, un agent hydrofuge, un agent rétenteur d'eau ou un agent anti-retrait.

9. Composition selon l'une quelconque des revendications **1** à **8, caractérisée en ce qu'**elle renferme un ou plusieurs additifs minéraux en poudre, choisi(s) parmi le kaolin, l'argile crue en poudre, l'oxyde de zinc, le plâtre, le ciment alumineux fondu, le dioxyde de titane, un liant ettringitique, un fluorosilicate tel que l'hexafluorosilicate de sodium, en concentration de préférence inférieure à 20 parties en poids, de préférence encore entre 0,5 et 10 parties en poids, pour 100 parties en poids de la matrice.

10. Composition selon la revendication **9 caractérisé en ce que** l'argile crue en poudre comprend majoritairement de la kaolinite ou de la montmorillonite.

11. Procédé de réalisation d'un matériau de construction comprenant le mélange de la composition selon l'une quelconque des revendications **1** à **10** avec :
i. de l'argile crue, de préférence dans des proportions pouvant aller jusqu'à 70 % en poids, de préférence encore jusqu'à 60 % en poids du matériau, et extrusion à froid ou moulage à froid dudit mélange ; ou
ii. des fibres d'origine végétale, telles que la sciure, les copeaux et les fibres de bois, la paille, la chènevotte, le lin, le liège ou la perlite.

12. Utilisation de la composition selon l'une quelconque des revendications **1** à **10** pour :
i. la réalisation d'éléments de revêtement, en particulier des revêtements de sols, tels que des carreaux, dalles, pavés ou bordures, des revêtements de murs, tels que des éléments de façade intérieures ou extérieures, des plaquettes de parement, des éléments de bardage, ou des revêtements de toitures de type tuiles, pour la réalisation de modules de construction extrudés ou moulés, telles que des briques, ou pour la réalisation de formes extrudées variées ; ou
ii. la réalisation de matériaux composites, tels que des panneaux de construction de type panneaux préfabriqués, de blocs préfabriqués tels que des linteaux de porte ou de fenêtre, des éléments de murs préfabriqués, ou tout autre élément de construction préfabriqué ; ou
iii. la réalisation de modules d'isolation, tels que des panneaux de cloisons, ou des modules de construction isolants légers de masse volumique inférieure à 1 ,5 kg/L, de préférence inférieure à 1 ,2 kg/L, de préférence encore inférieure à 1 ,0 kg/L, de préférence encore inférieure à 0,7 kg/L ; ou
iv. la réalisation par fabrication additive, telle qu'au moyen d'une imprimante 3D, d'éléments de construction, de bâtiments ou de maisons, ou d'objets de décoration ; ou
v. la réalisation sous la forme d'un système bi-composant avec soit d'une part les constituants sous forme solide, et d'autre part les constituants sous forme liquide, soit les constituants sous la forme de deux pâtes, pour la réalisation de mastic, colle ou mortier de scellement.

## Patentansprüche

1. Zusammensetzung für Baumaterial, umfassend eine Matrix, die vorwiegend ein Metakaolin enthält, und eine alkalische Aktivierungslösung, **dadurch gekennzeichnet, dass** sie einen Massenanteil an Zement oder Klinker von weniger als 10 % enthält, dass das Metakaolin ein "geflashtes" Metakaolin ist, das durch Flash-Kalzinierung eines Tons in Pulverform bei einer Temperatur zwischen 600 und 900 °C für einige wenige Sekunden, gefolgt von einer schnellen Abkühlung erhalten wird, und dass die alkalische Aktivierungslösung eine Natrium- oder Kaliumsilikat-Quelle (gemäß der Zementklassifikation SiO2 und M2O enthaltend) und eine alkalische Base, wie NaOH und/oder KOH, umfasst (wobei in M2O gemäß der Zementklassifikation M das Natrium oder das Kalium darstellen kann), wobei die relativen Anteile der Aktivierungslösung und der Matrix derart sind, dass die Gesamtsumme an Mol von SiO2 + M2O der Aktivierungslösung zwischen 3,5 und 5,5 mol/kg der Matrix liegt, und wobei die alkalische Aktivierungslösung ein SiO2/M2O-Molgesamtverhältnis zwischen 1,25 und 1,65 aufweist.

2. Zusammensetzung nach Anspruch **1, dadurch gekennzeichnet, dass** sie einen Massenanteil an Zement oder Klinker von weniger als 5 %, vorzugsweise weniger als 1 % enthält.

3. Zusammensetzung nach Anspruch **1** oder Anspruch **2, dadurch gekennzeichnet, dass** die alkalische Base der alkalischen Aktivierungslösung eine wässrige NaOH-Sodalösung ist.

4. Zusammensetzung nach einem der Ansprüche **1** bis **3, dadurch gekennzeichnet, dass** die Matrix, mit dem geflashten Metakaolin gemischt, ein nicht geflashtes Metakaolin, ein oder mehrere pulverförmige Mineralmaterialien, d. h. mit einer Korngröße, die vorteilhafterweise weniger als 200 Mikrometer beträgt, die aus Hochofenschlacke, Flugaschen der Klasse F, Ausschuss von der Schamotten- und/oder Metakaolinherstellung, Wollastonit, Terrakottapulver, das insbesondere von Ausschuss von der Ziegelherstellung stammt, Mineralpulvern, die eine Puzzolan-Aktivität aufweisen, Pulver von recyceltem Glas, Bruchglas, Flugaschen der Klasse C oder Löschkalk ausgewählt sind, umfasst.

5. Zusammensetzung nach Anspruch **4, dadurch gekennzeichnet, dass** die Massenkonzentrationen von pulverförmigen Materialien in der Matrix, mit mindestens 20 % Metakaolin gemischt, die folgenden sind:
- weniger als oder gleich 80 %, vorzugsweise weniger als 60 % und mehr bevorzugt weniger als 50 % für die Hochofenschlacke, die Flugaschen der Klasse F, des Ausschusses von der Schamotten- und/oder Metakaolinherstellung, das Wollastonit und das Terrakottapulver,
- weniger als oder gleich 40 %, vorzugsweise weniger als 25 % für die Mineralpulver, die eine Puzzolan-Aktivität aufweisen, das Pulver von recyceltem Glas, das Bruchglas oder die Flugaschen der Klasse C,
- weniger als oder gleich 15 %, vorzugsweise weniger als 10 %, mehr bevorzugt weniger als oder gleich 5 % für den Löschkalk.

6. Zusammensetzung nach Anspruch **4** oder Anspruch **5, dadurch gekennzeichnet, dass** die Matrix das geflashte Metakaolin und die Hochofenschlacke in einer Massenkonzentration an Schlacke von weniger als oder gleich 30 % des Gesamtgewichts der Matrix umfasst.

7. Zusammensetzung nach einem der Ansprüche **1** bis **6, dadurch gekennzeichnet, dass** die relativen Anteile der Aktivierungslösung und der Matrix derart sind, dass die Gesamtsumme an Mol von SiO2 + M2O der Aktivierungslösung zwischen 4,5 und 5,5 mol/kg der Matrix, vorzugsweise zwischen 4,5 und 5,3 mol/kg der Matrix liegt.

8. Zusammensetzung nach einem der Ansprüche **1** bis **7, dadurch gekennzeichnet, dass** sie ein oder mehrere Zusatzstoffe, wie einen Betonverflüssiger, ein wasserabweisendes Mittel, ein wasserbindendes Mittel oder ein Antischrumpfmittel, enthält.

9. Zusammensetzung nach einem der Ansprüche **1** bis **8, dadurch gekennzeichnet, dass** sie ein oder mehrere Mineral-Additive in Pulverform, die aus Kaolin, ungebranntem Ton in Pulverform, Zinkoxid, Gips, Tonerdeschmelzzement, Titandioxid, Ettringit-Bindemittel, einem Fluorsilikat, wie Natriumhexafluorsilikat, ausgewählt sind, in einer Konzentration von vorzugsweise weniger als 20 Gewichtsteilen, mehr bevorzugt zwischen 0,5 und 10 Gewichtsteilen pro 100 Gewichtsteile der Matrix enthält.

10. Zusammensetzung nach Anspruch **9, dadurch gekennzeichnet, dass** der ungebrannte Ton in Pulverform vorwiegend Kaolinit oder Montmorillonit umfasst.

11. Verfahren zur Herstellung eines Baumaterials, umfassend das Mischen der Zusammensetzung nach einem der Ansprüche **1** bis **10** mit:
i. ungebranntem Ton, vorzugsweise in Anteilen, die bis zu 70 Gew.-%, vorzugsweise bis zu 60 Gew.-% des Materials reichen können, und die Kaltextrusion oder den Kaltguss des Gemischs; oder
ii. Fasern mit pflanzlichem Ursprung, wie Sägemehl, Hobelspäne und Holzfasern, Stroh, Schäbe, Flachs, Kork oder Perlit.

12. Verwendung der Zusammensetzung nach einem der Ansprüche **1** bis **10** zur:
i. Herstellung von Belags- oder Verkleidungselementen, insbesondere Fußbodenbelägen, wie Fliesen, Bodenplatten, Pflastersteine oder Bordkanten, Wandverkleidungen, wie Innen- oder Außenfassadenelemente, Verkleidungsplatten, Fassadenverkleidungselemente oder Dachbeläge vom Ziegeltyp, zur Herstellung von extrudierten oder gegossenen Bauelementen, wie Ziegelsteine, oder zur Herstellung von verschiedenen extrudierten Formen; oder
ii. Herstellung von Verbundwerkstoffen, wie Bauplatten vom vorgefertigten Plattentyp, vorgefertigte Blöcke, wie Tür- oder Fensterstürze, vorgefertigte Wandelemente oder ein beliebiges anderes vorgefertigtes Bauelement; oder
iii. Herstellung von Dämmungsmodulen, wie Trennwandplatten, oder leichten dämmenden Baumodulen mit einer Raumdichte von weniger als 1,5 kg/L, vorzugsweise weniger als 1,2 kg/L, mehr bevorzugt weniger als 1,0 kg/L, mehr bevorzugt weniger als 0,7 kg/L; oder
iv. Herstellung von Bau-, Gebäude- oder Hauselementen oder dekorativen Objekten durch additive Fertigung, wie mittels eines 3D-Druckers; oder
v. Herstellung in der Form eines Zweikomponentensystems mit einerseits Bestandteilen in fester Form und andererseits Bestandteilen in flüssiger Form oder Bestandteilen in der Form von zwei Pasten zur Herstellung von Kitt, Klebstoff oder Vergussmörtel.

## Claims

1. A composition for a building material comprising a matrix predominantly containing a metakaolin-based compound, and an alkaline activation solution, **characterized in that** it contains less than 10 wt.% cement or clinker, **in that** the metakaolin is a "flashed" metakaolin obtained via flash calcination of a powdered clay at a temperature between 600 and 900 °C for a few seconds, followed by a fast cooling,
and **in that** the alkaline activation solution comprises a source of sodium or potassium silicate (according to the cement nomenclature containing SiO2 and M2O), and an alkaline base, such as NaOH and/or KOH, (noted as M2O according to the cement nomenclature, with M representing sodium or potassium), the relative proportions of the activation solution and of the matrix being such that the total amount in SiO2 + M2O moles of the activation solution is between 3.5 and 5.5 mol/kg of matrix and wherein the alkaline activation solution has a SiO2 /M2O global molar ratio between 1.25 and 1.65.

2. The composition according to claim **1, characterized in that** it contains less than 5 wt.% cement or clinker, preferably less than 1 wt.%.

3. The composition according to claim **1** or claim **2, characterized in that** the alkaline base of the alkaline activation solution is an aqueous solution of soda NaOH.

4. The composition according to any one of claims **1** to **3, characterized in that** the matrix comprises, mixed with flashed metakaolin, an unflashed metakaolin, one or several powdery mineral materials, that is to say with a granulometry advantageously less than 200 microns, chosen from blast furnace slag, fly ash of class F, scraps from chamotte and/or metakaolin manufacture, wollastonite, terra-cotta powder, issue, in particular from scraps from brickmaking, mineral powders with pozzolanic activity, recycled glass powder, cullet, fly ash of class C or slaked lime.

5. The composition according to claim **4, characterized in that** the mass concentrations of powdery materials in said matrix, mixed with at least 20% of metakaolin are as follows:
- less than or equal to 80%, preferably less than 60% and more preferably less than 50% for blast furnace slag, fly ash of class F, scraps from chamotte and/or metakaolin manufacture, wollastonite and terra-cotta powder,
- less than or equal to 40%, preferably less than 25% for mineral powders with pozzolanic activity, recycled glass powder, cullet or fly ash of class C,
- and less than or equal to 15%, preferably less than 10%, more preferably less than or equal to 5% for slaked lime.

6. The composition according to claim **4** or claim **5, characterized in that** the matrix comprises flashed metakaolin and blast furnace slag in a mass concentration in slag less than or equal to 30% of the total weight of the matrix.

7. The composition according to any one of claims **1** to **6, characterized in that** the relative proportions of the activation solution and of the matrix are such that the total amount in SiO2 + M2O moles of the activation solution is between 4.5 and 5.5 mol/kg of matrix, preferably between 4.5 and 5.3 mol/kg of matrix.

8. The composition according to any one of claims **1** to **7, characterized in that** it contains one or more adjuvants, such as a superplasticiser, a water-repellent agent, a water-retention agent or an anti-shrinkage agent.

9. The composition according to any one of claims **1** to **8, characterized in that** it contains one or more powder mineral additives, chosen from kaolin, powdered unfired clay, zinc oxide, plaster, molten aluminous cement, titanium dioxide, an ettringite binder, a fluorosilicate such as sodium hexafluorosilicate, in a concentration preferably less than 20 parts by weight, more preferably between 0.5 and 10 parts by weight, for 100 parts by weight of the matrix.

10. The composition according to claim **9, characterized in that** the powdered unfired clay comprises predominantly kaolinite or montmorillonite.

11. A method for producing a building material comprising mixing the composition according to any one of claims **1** to **10,** with:
i. unfired clay, preferably in proportions that range up to 70% by weight, more preferably up to 60% by weight of the material, and cold extrusion or cold moulding of said mixture; or
ii. fibres of plant origin, such as sawdust, wood chips and fibres, straw, shive, flax, cork or perlite.

12. Use of the composition according to any one of claims **1** to **10** for:
i. manufacturing coating elements, in particular floor coatings, such as tiles, slabs, stones or edges, wall coatings, such as indoor or outdoor façade elements, facing plates, cladding elements, or roof coatings of the tile type, for the production of extruded or moulded building modules, such as bricks, or for the production of varied extruded forms; or
ii. the production of composite materials, such as building panels of the prefabricated panel type, of prefabricated blocks such as door or window lintels, prefabricated wall elements, or any other prefabricated building element; or
iii. the production of insulation modules, such as partition boards, or light insulating building modules of a density less than 1.5 kg/L, preferably less than 1.2 kg/L, more preferably less than 1.0 kg/L, even more preferably less than 0.7 kg/L; or
iv. the production via additive manufacturing, such as by means of a 3D printer, of building elements, buildings or homes, or decorative objects; or
v. the production in the form of a two-component system with either on the one hand the constituents in solid form, and on the other hand the constituents in liquid form, or the constituents in the form of two pastes, for the production of sealing mastic, glue or mortar.
